# EUROPEAN PATENT SPECIFICATION

(11) **EP 2 137 676 B1**
(45) Date of publication and mention of the grant of the patent: **18.06.2014**
(21) Application number: 08725871.1
(22) Date of filing: 19.02.2008
(51) Int. Cl.: G06K 17/00, G06F 1/16, H04L 29/06

(54) **Wireless access control system and method**
System und Verfahren zur Kontrolle des drahtlosen Zugangs
Procédé et système de contrôle d'accès sans fil

(30) Priority: 11.04.2007 US 786297
(43) Date of publication of application: 30.12.2009
(73) Proprietor: Hewlett-Packard Development Company, L.P., Houston, TX 77070 (US)
(72) Inventor: BATCHELOR, Michael, D., Houston, TX 77070 (US); RYDER, Brian D., Houston, TX 77070 (US); FRY, Walter G., Houston, TX 77070 (US)
(74) Representative: Holt, Daniel Richard
(86) International application number: PCT/US2008/002278
(87) International publication number: WO 2008/127507

(56) References cited:
- EP-B1- 0 809 174
- WO-A1-2006/039119
- WO-A1-2006/050206
- WO-A1-2006/050206
- JP-A- 2000 194 444
- JP-A- 2006 041 639
- US-A- 5 878 211
- US-A1- 2001 021 950
- US-A1- 2007 029 380

## Description

### BACKGROUND

Notebook computers and other computing devices, such as personal digital assistants (PDAs), cellular phones and audio devices, use standardized interfaces. For example, notebook computers can be connected to any one of a number of different docking stations so long as the docking station is compatible with the particular notebook. For example, if an employer provides its employees with a particular model of notebook computers and corresponding docking stations, the employees will be able to dock their assigned notebook computers at any one of the other employees' docking stations. Further, a non-employee having a notebook computer compatible with the distributed docking station will also be able to dock his/her notebook computer at any one of the employees' docking stations. Since docking stations are often used for access to local area networks and other computing resources, the non-employee may gain access to resources without authorization. Thus, the possibility of a connection between a docking station and an unauthorized, but compatible, computing device elevates the risk of a network intrusion, virus infection, or other malicious activity.

US 2001/021950 A1 discloses a method and an apparatus for controlling access to a computer network using tangible media. Interaction with a computer network is facilitated or restricted based on a tangible token, such as a small card or disk, a small everyday article, a toy, or a product container. The token comprises a machine-readable indication, or "tag" that identifies the token and which may be wirelessly read by a tag reader. The tag reader communicates the identifier to a computer connected to the network as a node. The computer, in response, determines and implements a network-access criterion based on the token. Generally, the computer maintains a database relating token identifiers to associated network-access criteria, and consults the database when presented with an identifier. The access criterion specifies information governing interaction between the computer and the network, and can serve to initiate connections or restrict them.

WO 2006/050206 A1 discloses a communication system used by a portable patient monitoring device in connecting to a plurality of other devices, including a docking station suitable for attaching to the portable patient monitoring device. The docking station may comprise an RFID tag encoded to return data representing an unique identifier associated with the docking station when queried.

JP 2006 041639 discloses a method for matching a charging dock with a mobile device using RFID.

The invention provides for a wireless access control system according to claim 1 and a wireless access control method according to claim 5.

### BRIEF DESCRIPTION OF THE DRAWINGS

For a more complete understanding of the present application, the objects and advantages thereof, reference is now made to the following descriptions taken in conjunction with the accompanying drawings, in which:
FIGURE 1 is a diagram illustrating an embodiment of a wireless access control system;
FIGURE 2 is a flow diagram illustrating an embodiment of a wireless access control method; and
FIGURE 3 is another flow diagram illustrating an embodiment of a wireless access control method.

### DETAILED DESCRIPTION OF THE DRAWING

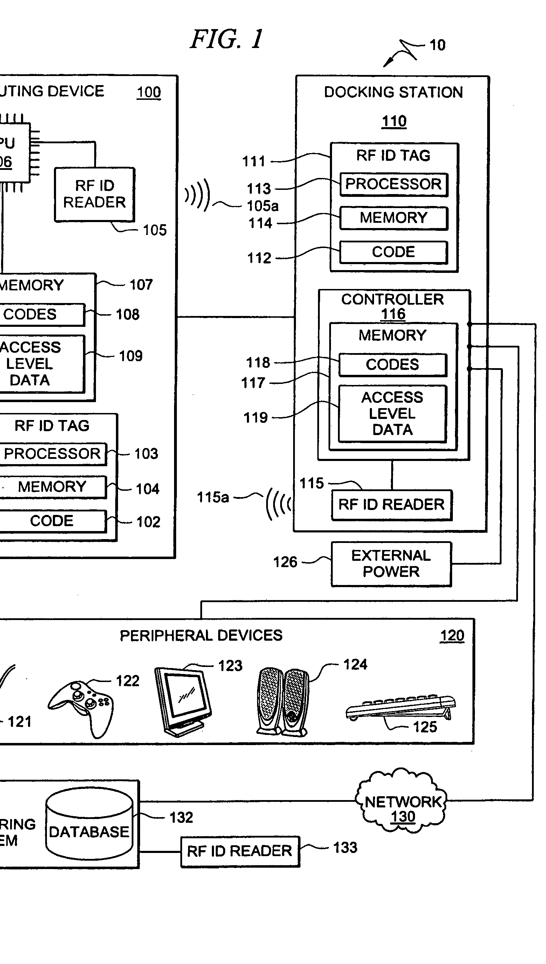

FIGURE 1 is a diagram illustrating an embodiment of a wireless access control system 10. In some embodiments, system 10 enables wireless authentication between a computing device 100 and a docking station 110. In some embodiments, docking station 110 is configured to selectively provide access to computing resources that are connected to and/or controlled by docking station 110 based on the identification of a particular computing device brought into proximity with docking station 110. Computing resources may comprise external power, a computer network, and/or input/output (I/O) devices such as a mouse, a game controller, a monitor, speakers and a keyboard. Multiple computing devices may be compatible with docking station 110 such that multiple computing devices are each capable to connect to docking station 110. System 10 is used to control access to various resources through docking station 110 based on the identification of a particular computing device 100 brought into proximity and/or connected to docking station 110.

In the embodiment illustrated in FIGURE 1, system 10 is implemented with computing device 100 comprising a notebook computer. Computing device 100 is configured to connect to docking station 110. However, it should be understood that system 10 may be implemented with any type of computing device or computing resource including, but not limited to, a desktop computer, a personal digital assistant (PDA), an audio device, an audio device dock, a video device, a gaming device, a printer, a scanner and a cellular telephone.

In the embodiment illustrated in FIGURE 1, computing device 100 comprises a radio frequency identification (RFID) tag 101 for wirelessly identifying computing device 100 to docking station 110. In some embodiments, RFID tag 101 comprises a passive wireless device that, in response to being energized and/or inductively powered by an RFID reader, transmits a numerical code and/or performs other processing. RFID tags are passive devices because RFID tags do not use an internal or dedicated power source. Rather, RFID tags use power received from radio waves transmitted by a RFID reader to transmit a wireless signal comprising, for example, the numerical code and/or perform other processing functions. In the embodiment illustrated in FIGURE 1, RFID tag 101 comprises a code 102, a processor 103 and a memory 104. Code 102 comprises information used to identify computing device 100. In some embodiments, RFID tag 101 automatically transmits code 102 in response to being energized by an RFID reader. In some embodiments, code 102 is contained within memory 104, and processor 103 retrieves code 102 from memory 104. In some embodiments, RFID tag 101 comprises a chip having an inductively-powered processor and writeable memory. RFID tag 101 may be affixed to computing device 100 (e.g., affixed to an external area of computing device 100), disposed within computing device 100 (e.g., a chip disposed on a motherboard or elsewhere in computing device 100), or otherwise located in and/or on computing device 100. However, it should be understood that other wireless methods or devices may be used to identify computing device 100 to docking station 110.

In the embodiment illustrated in FIGURE 1, computing device 100 also comprises an RFID reader 105. RFID reader 105 transmits radio frequency waves 105a that are used to inductively couple RFID reader 105 to an RFID tag, thereby energizing the RFID tag to perform a particular function. In some embodiments, RFID reader 105 is used to identify a docking station that is equipped with an RFID tag. For example, in some embodiments, even before a user connects computing device 100 to a particular docking station 110, computing device 100 uses RFID reader 105 to identify a particular docking station 110. In some embodiments, based on the identity of the particular docking station 110, computing device 100 determines whether to communicatively connect to the particular docking station 110 and/or whether to connect to various resources available through the particular docking station 110.

In FIGURE 1, computing device 100 also comprises a central processing unit (CPU) 106 and a memory 107. In FIGURE 1, CPU 106 is coupled to RFID reader 105 and memory 107 for processing data received by RFID reader 105 (e.g., data received from an RFID tag disposed on a docking station) and comparing the received data with one or more codes 108 stored in memory 107. Memory 107 may comprise volatile memory, non-volatile memory and/or permanent storage, such as a digital media drive (DMD). In the embodiment illustrated in FIGURE 1, memory 107 comprises access level data 109 that is related to codes 108. Access level data 109 comprises information providing indications of the computing resources computing device 100 is authorized to access from a particular docking station 110 based on code(s) 108. For example, in some embodiments, access level data 109 is used to identify particular computing resources that computing device 100 is authorized to access for a particular docking station 110 (e.g., based on a particular code 108 associated with the particular docking station 110). For example, in some embodiments, in response to reading an RFID tag associated with a particular docking station 110, a particular code 108 is identified (e.g., a particular code 108 matching a code received by an RFID tag of the particular docking station 110). Based on the particular code 108, access level data 109 is accessed and used to identify the particular docking station 110 and/or computing resources available through the particular docking station 110. Access level data 109 may indicate that all computer resources available through the particular docking station 110 may be accessed by computing device or that none or only a portion of the computing resources available through the particular docking station 110 may be accessed (e.g., enabling access to external power and/or selected I/O devices while preventing access to a network). Thus, in some embodiments, CPU 106 prevents computing device 100 from accessing peripherals, external power and/or a computer network when connected to certain docking stations 110. In some embodiments, based on code 108, CPU 106 may also prevent computing device 100 from communicatively connecting with a particular docking station 110 in any manner.

In the embodiment illustrated in FIGURE 1, docking station 110 comprises an RFID tag 111. In some embodiments, RFID tag 111 is used to identify docking station 110 (e.g., to computing device 100). For example, in FIGURE 1, RFID tag 111 comprises a code 112, a processor 113 and a memory 114. In some embodiments, RFID tag 111 automatically transmits code 112 in response to inductively coupling and/or being otherwise energized by an RFID reader, such as RFID reader 105 in computing device 100. In some embodiments, code 112 is contained within memory 114, and processor 113 retrieves code 112 from memory 114 in response to RFID tag 111 being energized from radio waves (e.g., radio waves 105a) received by an RFID reader. RFID tag 111 may be affixed to docking station 110 (e.g., affixed to an external area of docking station 110 by adhesive or otherwise), disposed within docking station 110 (e.g., a chip disposed on a printed circuit board or elsewhere in docking station 110), or otherwise located in and/or on docking station 110. Thus, in some embodiments, computing device 100 identifies docking station 110 based on code 112 transmitted by RFID tag 111. However, it should be understood that other wireless methods or devices may be used to identify docking station 110 to computing device 110.

In the embodiment illustrated in FIGURE 1, docking station 110 also comprises an RFID reader 115. RFID reader 115 transmits radio frequency waves 115a that are used to inductively couple RFID reader 115 to an RFID tag (e.g., RFID tag 101), thereby energizing the RFID tag to perform a particular function. In some embodiments, RFID reader 115 is used to identify a particular computing device 100 brought within proximity of docking station 110 (e.g., based on a code received from an RFID tag associated with the particular computing device 100). In some embodiments, RFID reader 115 enables docking station 110 to selectively grant access to computing resources that are available through docking station 110 based on the particular computing device 100 identified by docking station 110. Thus, in some embodiments, even before a user connects computing device 100 to docking station 110, docking station 110 is configured to identify the particular computing device 100 and, based on the identity of the particular computing device 100, determine the resources available from docking station 110 that the particular computing device 100 may access.

In the embodiment shown in FIGURE 1, docking station 110 also comprises a controller 116 having a memory 117. Controller 116 is coupled to RFID reader 115 for processing data received by RFID reader 115 from an RFID tag (e.g., RID tag 101 on computing device 100). Controller 116 compares the received data with codes 118 stored in memory 117. Memory 117 may comprise volatile memory, non-volatile memory and/or permanent storage, such as a digital media drive (DMD). In some embodiments, memory 117 comprises access level data 119 that is related to codes 118. Access level data 119 comprises information comprising an indication of the computing resources that docking station 110 is authorized to grant to a particular computing device 100 based on code(s) 118. For example, in some embodiments, access level data 119 comprises information indicating, based on a particular code 118 (e.g., based on a particular computing device 100 brought into proximity to and/or otherwise connected to docking station 110), the particular resources that the particular computing device 100 is authorized to access via docking station 110. Access level data 119 may indicate that all computer resources available through docking station 110 may be accessed by the particular computing device 100 or that none or only a portion of the computing resources available through docking station 110 may be accessed (e.g., enabling access to external power and/or selected I/O devices while preventing access to a network). Thus, in some embodiments, controller 116 provides and/or prevents access for a particular computing device 100 to particular resources available through docking station 110 based on the identification of the particular computing device 100 (e.g., based on comparing a code received from an RFID tag of the particular computing device 100 with one or more codes 118 and, based on the particular matching codes, granting/denying access to resources based on access level data 119).

In the embodiment illustrated in FIGURE 1, docking station 110 is connected to one or more peripheral devices 120, an external power connection 126, and a network 130. In FIGURE 1, peripheral devices 120 comprise a mouse 121, a game controller 122, a monitor 123, speakers 124 and a keyboard 125. However, I should be understood that peripheral devices 120 may comprise additional and/or other types of devices coupled to docking station 110. Network 130 may comprise the Internet, an intranet, or any other type of wired or wireless network. In the embodiment shown in FIGURE 1, controller 116 controls access to peripheral devices 12, external power connection 126 and network 130 by a particular computing device 100. For example, based on the level of access indicated by access level data 119 for a particular computing device 100 (e.g., based on code 102 from RFID tag 101 of computing device 100, controller 116, based on a correlated code 118 and corresponding access level data 119, may grant the particular computing device 100 access to mouse 121, keyboard 124 and external power connection 126 (thereby enabling computing device 100 to charge batteries) while denying access to network 130 and other peripheral devices 120 (e.g., game controller 122, monitor 123 and speakers 124).

In the embodiment shown in FIGURE 1, network 130 couples docking station 110 to a monitoring system 131. In FIGURE 1, monitoring system 131 is connected to an RFID reader 133. RFID reader 133 transmits radio frequency waves that are used to inductively couple RFID reader 133 to an RFID tag, thereby energizing the RFID tag to perform a particular function. In some embodiments, RFID reader 133 is used to identify a computing device (e.g., computing device 100) that is equipped with an RFID tag. For example, in response to computing device 100 being brough into proximity of RFID reader 133, RFID reader detects and identifies to computing device. However, it should be understood that other wireless devices or methods may be used to detect and identify the computing device.

In some embodiments, monitoring system 131 comprises a relational database 132 that is maintained by an administrator. In some embodiments, relational database 132 comprises relational information associated with the particular identification codes associated with particular computing devices 100 (e.g., codes 102), the particular identification codes associated with particular docking stations 110 (e.g., codes 118) and/or the resource access levels associated with particular computing devices 100 and/or docking stations 110 (e.g., codes 108 and 118 and access level data 109 and 119, respectively). Thus, in some embodiments, the administrator sets connection policies and resource access levels, which are implemented in database 132, for particular computing devices 100 and/or docking stations 110. The connection policies and resource access levels for computing devices 100 and docking stations 110 may be used independently or in combination. For example, in some embodiments, a particular computing device 100 may have a particular resource access level regardless of the particular docking station 110 to which it is being docked while, in other embodiments, the level of resource access may vary depending on the particular docking station 110 to which the particular computing device 100 is being docked. Similarly, in some embodiments, a particular docking station 110 may be configured to grant a particular level of access to resources regardless of the particular computing device 100 to which it is docked while, in other embodiments, docking station 110 is configured to vary the level of resource access based on the particular computing device 100 to which it is docked.

In some embodiments, monitoring system 131 uses network 130 to automatically updates code(s) 118 and/or access level data 119 in memory 117 with one or more entries in database 132. In some embodiments, monitoring system 131 also updates code(s) 108 and/or access level data 109 in memory 107 with one or more entries in database 132 (e.g., in response to a particular computing device 100 being connected to network 130 through a particular docking station 110 or otherwise). However, it should be understood that other methods for updating codes memory 107 and memory 117 may also be used. It should b understood that codes 102 an/or 112 may also be updated and/or changed.

In some embodiments, instead of storing code(s) 118 and/or access level data 119 locally at docking station 110, docking station 110 may be configured to transmit a received code (e.g., code 102 from a particular computing device 100) to monitoring system 131 via network 130 and implement resource access level instructions returned by monitoring system 131 (e.g., such that code(s) 118 and/or access level data 119 is stored at monitoring system 131 in database 132 remote from docking station 110). In this mode of operation, monitoring system 131 processes the identification of code 102 using database 132 and transmits resource access level instructions to controller 116 of docking station 110. Further, in this embodiment, monitoring system 131 may also log a record of the particular docking event. Thus, in some embodiments, monitoring system 131 is able to identify the location of a particular computing device 100 as nearby or docked to a particular docking station 110, thereby facilitating theft detection and/or assistance with computer inventory audits.

In some embodiments, RFID reader 133 is located remote from monitoring system 131 and at a particular location (e.g., near a building entrance/exit) to enable identifying the location of a particular computing device 100. For example, in some embodiments, in response to a particular computing device 100 being brought into proximity with RFID reader 133, RFID reader 133 detects and/or otherwise reads code 102 from RFID tag 101 associated with the particular computing device 100. Remote RFID reader 133 transmits the indication of the identified code 102 to monitoring system 131, thereby facilitating identification of a location of the particular computing device 100 and facilitating theft detection. It should by understood that the quantity and locations of RFID readers 133 may be varied and may be connected to monitoring system 11 via network 130 or otherwise.

Thus, for example, in some embodiments, based on the policies of implemented in the configuration of monitoring system 131 and/or database 132, monitoring system 131 may update database 132 to associate a code for a particular computing device 100 (e.g., code 102) with denial of access to network 130 or other resources and may pass this update to access level data 119 to one or more docking stations 110 connected to network 130. Thus, in some embodiments, if a user attempts to reconnect a particular computing device 100 to a particular docking station 110 after the particular computing device 100 has been removed by a particular area without authorization, system 10 is able to protect network 130 from infection by a virus and/or other malicious logic possibly picked up by computing device 100 during the unauthorized absence by preventing the particular computing device 100 from accessing network 130 and/or other resources.

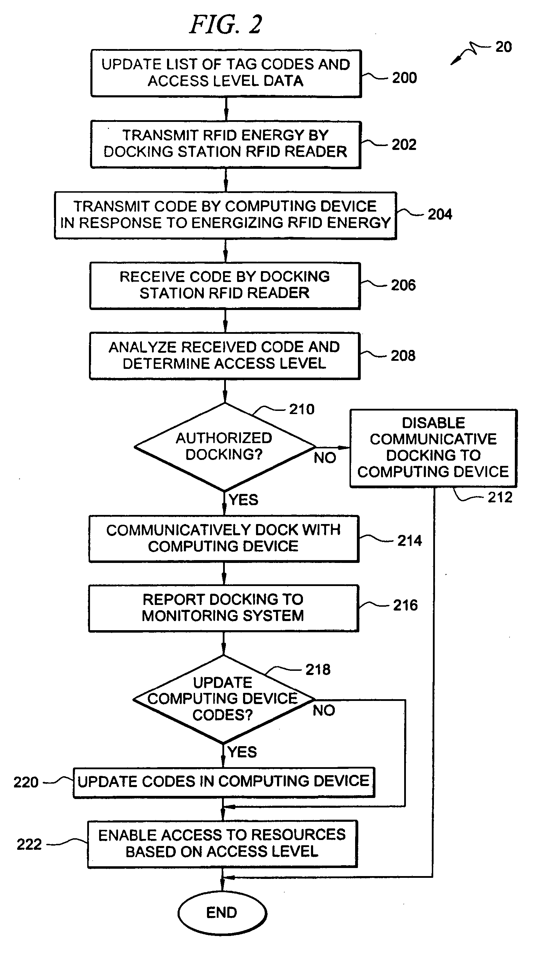

FIGURE 2 is a flow diagram illustrating an embodiment of a wireless access control method 20. Method 20 is described with reference to system 10 of FIGURE 1, although it should be understood that method 20 may be used with alternative embodiments.

At block 200, controller 116 receives tag code(s) 188 and corresponding access level data 119 from monitoring system 131. At block 202, RFID reader 115 transmits an RFID signal looking for an RFID tag that may have been brought into proximity of docking station 110. In some embodiments, RFID reader 115 is configured to transmit radio frequency energy at periodic intervals on a continuous basis; however, it should be understood that RFID reader 115 may be otherwise configured. At block 204, RFID tag 101 of computing device 100 that is within proximity of docking station 110 and is energized by radio frequency energy transmitted by RFID reader 115 responds with code 102. At block 206, RFID reader 115 receives code 102 and relays code 102 to controller 116.

At block 208, controller 116 compares code 102 with code(s) 118 and, based on the comparison of code 102 to code(s) 118, determines the access privileges authorized for the particular computing device 100 using access level data 119. At decision block 210, controller 116 determines whether the particular computing device 100 is authorized to dock to docking station 110 (e.g., based on code 102 and/or access level data 119). If, at decision block 210, controller 116 determines that code 102 is associated with a particular computing device 100 that is unauthorized to dock to docking station 110, controller 116 disables and/or otherwise prevents communicative coupling of the particular computing device 100 to docking station 110. If, at decision block 210, controller 116 determines that code 102 is associated with a particular computing device 100 that is authorized to dock to docking station 110, the method proceeds to block 214, where computing device 100 is communicatively coupled to docking station 110.

At block 216, controller 116 informs monitoring system 131 that the particular computing device 100 is docked to docking station 110. It should also be understood that controller 116 may also be configured to inform monitoring system 131 that the particular computing device 100 is in proximity to docking station (e.g., before docking of the particular computing device 100 to docking station 110 based on code 102 received from the particular computing device 100). At decision block 218, controller 116 determines and/or is otherwise notified (e.g., by monitoring system 131) whether code 102 of the particular computing device 100 is to be updated. If the code 102 of the particular computing device 100 is to be updated, the method proceeds to block 220, where the code 102 of the code 102 of the particular computing device 100 is updated. If at decision block 218 it is determined that updating of the particular computing device 100 is not needed, the method proceeds to block 222. At block 222, controller 116 enables access to one or more resources via docking station 110 based on access level data 119.

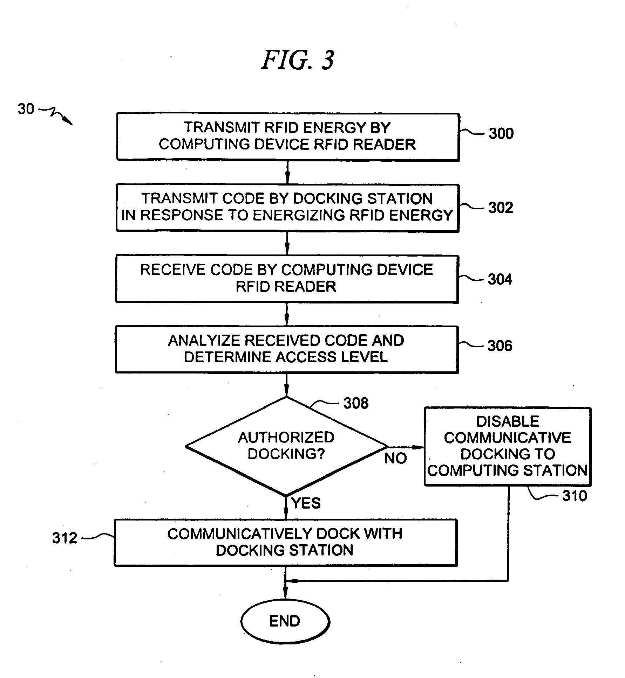

FIGURE 3 is a flow diagram illustrating an embodiment of a wireless access control method 30. Method 30 is described with reference to system 10 of FIGURE 1, although it should be understood that method 30 may be used with alternative embodiments.

At block 300, RFID reader 105 transmits an RFID signal looking for an RFID tag that may have been brought into proximity of computing device 100. In some embodiments, RFID reader 105 is configured to transmit radio frequency energy at periodic intervals on a continuous basis; however, it should be understood that RFID reader 105 may be otherwise configured. At block 302, RFID tag 111 of docking station 110 that is within proximity of computing device 100 and is energized by radio frequency energy transmitted by RFID reader 105 responds with code 112. At block 304, RFID reader 105 receives code 112 and relays code 112 to CPU 106.

At block 306, CPU 106 compares code 112 with code(s) 108 and, based on the comparison of code 112 to code(s) 108, determines the access privileges authorized for the particular docking station 110 using access level data 109. At decision block 308, CPU 106 determines whether the particular computing device 100 is authorized to dock to docking station 110 (e.g., based on code 112 and/or access level data 109). If, at decision block 308, CPU 106 determines that code 112 is associated with a particular docking station 110 to which computing device 100 is unauthorized to dock, CPU 106 disables and/or otherwise prevents communicative coupling of computing device 100 to docking station 110 at block 310. If, at decision block 308, CPU 106 determines that code 112 is associated with a particular docking station 110 to which computing device 100 is authorized to dock, the method proceeds to block 312, where computing device 100 is communicatively coupled to docking station 110.

## Claims

1. A wireless access control system (10), comprising:
a docking station (110) configured to wirelessly identify a computing device (100), the docking station (110) configured to, based on the identification of the computing device (100), selectively control access to at least one resource available through the docking station (110) by the computing device (100),
**characterized in that** the docking station (110) is configured to determine whether to enable the computing device (100) to communicatively connect to the docking station (110) based on the identification of the computing device (100),
wherein the docking station (110) comprises a radio frequency identification RFID reader (115) for wirelessly identifying the computing device (100), and
wherein the docking station (110) is configured to inductively power an RFID tag (101) of the computing device (100) to identify the computing device (100).

2. The system (10) of claim 1 wherein the docking station (110) is configured to wirelessly identify the docking station (110) to the computing device (100).

3. The system (10) of claim 2 wherein the computing device (100) is configured to determine whether to communicatively connect to the docking station (110) based on the identity of the docking station (110).

4. The system (10) of claim 2 wherein the computing device (100) is configured to selectively control access, based on the identity of the docking station (110), to at least one resource available through the docking station (110).

5. A wireless access control method, comprising:
wirelessly identifying, by a docking station (110), a computing device (100); and
selectively controlling, based on the identification of the computing device (100), access to at least one resource available through the docking station (110) by the computing device (100),
**characterized in that** the docking station (110) determines whether to enable the computing device (100) to communicatively connect to the docking station (110) based on the identification of the computing device (100), and
wherein the wirelessly identifying includes using a radio frequency identification RFID reader of the docking station and inductively powering an RFID tag (101) of the computing device (100) to identify the computing device (100).

6. The method of claim 5 further comprising determining a level of access for the computing device (100) based on the identification.

7. The method of claim 5 further comprising wirelessly identifying the docking station (110) to the computing device (100).

## Patentansprüche

1. Drahtloses Zugriffskontrollsystem (10), das Folgendes umfasst:
eine Dockingstation (110), die dazu konfiguriert ist, eine Datenverarbeitungsvorrichtung (100) drahtlos zu identifizieren, wobei die Dockingstation (110) dazu konfiguriert ist, auf der Basis der Identifizierung der Datenverarbeitungsvorrichtung (100) den Zugriff von der Datenverarbeitungsvorrichtung (100) auf mindestens eine Ressource, die durch die Dockingstation (110) verfügbar ist, gezielt zu steuern,
**dadurch gekennzeichnet, dass** die Dockingstation (110) dazu konfiguriert ist, auf der Basis der Identifizierung der Datenverarbeitungsvorrichtung (100) zu bestimmen, ob der Datenverarbeitungsvorrichtung (100) ermöglicht werden soll, eine Kommunikationsverbindung mit der Dockingstation (110) herzustellen,
wobei die Dockingstation (110) ein RFID-Lesegerät (RFID = Radiofrequenzidentifikation) (115) zum drahtlosen Identifizieren der Datenverarbeitungsvorrichtung (100) umfasst und
wobei die Dockingstation (110) dazu konfiguriert ist, einen RFID-Tag (101) der Datenverarbeitungsvorrichtung (100) induktiv mit Energie zu versorgen, um die Datenverarbeitungsvorrichtung (100) zu identifizieren.

2. System (10) nach Anspruch 1, wobei die Dockingstation (110) dazu konfiguriert ist, die Dockingstation (110) für die Datenverarbeitungsvorrichtung (100) drahtlos zu identifizieren.

3. System (10) nach Anspruch 2, wobei die Datenverarbeitungsvorrichtung (100) dazu konfiguriert ist, auf der Basis der Identität der Dockingstation (110) zu bestimmen, ob eine Kommunikationsverbindung mit der Dockingstation (110) hergestellt werden soll.

4. System (10) nach Anspruch 2, wobei die Datenverarbeitungsvorrichtung (100) dazu konfiguriert ist, auf der Basis der Identität der Dockingstation (110) den Zugriff auf mindestens eine Ressource, die durch die Dockingstation (110) verfügbar ist, gezielt zu steuern.

5. Drahtloses Zugriffskontrollverfahren, das Folgendes umfasst:
drahtloses Identifizieren einer Datenverarbeitungsvorrichtung (100) durch eine Dockingstation (110) und
auf der Basis der Identifizierung der Datenverarbeitungsvorrichtung (100) gezieltes Steuern des Zugriffs von der Datenverarbeitungsvorrichtung (100) auf mindestens eine Ressource, die durch die Dockingstation (110) verfügbar ist,
**dadurch gekennzeichnet, dass** die Dockingstation (110) auf der Basis der Identifizierung der Datenverarbeitungsvorrichtung (100) bestimmt, ob der Datenverarbeitungsvorrichtung (100) ermöglicht werden soll, eine Kommunikationsverbindung mit der Dockingstation (110) herzustellen, und
wobei das drahtlose Identifizieren das Verwenden eines RFID-Lesegeräts (RFID = Radiofrequenzidentifikation) der Dockingstation und das induktive Versorgen eines RFID-Tags (101) der Datenverarbeitungsvorrichtung (100) mit Energie, um die Datenverarbeitungsvorrichtung (100) zu identifizieren, beinhaltet.

6. Verfahren nach Anspruch 5, das weiterhin das Bestimmen eines Zugriffsniveaus für die Datenverarbeitungsvorrichtung (100) auf der Basis der Identifizierung umfasst.

7. Verfahren nach Anspruch 5, das weiterhin das drahtlose Identifizieren der Dockingstation (110) für die Datenverarbeitungsvorrichtung (100) umfasst.

## Revendications

1. Système de contrôle d'accès sans fil (10), comprenant :
une station d'accueil (110) configurée pour identifier de manière sans fil un dispositif informatique (100), la station d'accueil (110) étant configurée pour, sur la base de l'identification du dispositif informatique (100), contrôler de manière sélective un accès à au moins une ressource disponible par l'intermédiaire de la station d'accueil (110) par le dispositif informatique (100),
**caractérisé par le fait que** la station d'accueil (110) est configurée pour déterminer s'il faut ou non autoriser le dispositif informatique (100) à se connecter en communication à la station d'accueil (110) sur la base de l'identification du dispositif informatique (100),
la station d'accueil (110) comprenant un lecteur d'identification par radiofréquence RFID (115) pour identifier de manière sans fil le dispositif informatique (100), et
la station d'accueil (110) étant configurée pour alimenter de manière inductive une étiquette RFID (101) du dispositif informatique (100) pour identifier le dispositif informatique (100).

2. Système (10) selon la revendication 1, dans lequel la station d'accueil (110) est configurée pour identifier de manière sans fil la station d'accueil (110) sur le dispositif informatique (100).

3. Système (10) selon la revendication 2, dans lequel le dispositif informatique (100) est configuré pour déterminer s'il doit ou non se connecter en communication à la station d'accueil (110) sur la base de l'identité de la station d'accueil (110).

4. Système (10) selon la revendication 2, dans lequel le dispositif informatique (100) est configuré pour contrôler de manière sélective un accès, sur la base de l'identité de la station d'accueil (110), à au moins une ressource disponible par l'intermédiaire de la station d'accueil (110).

5. Procédé de contrôle d'accès sans fil, comprenant :
identifier de manière sans fil, par une station d'accueil (110), un dispositif informatique (100) ; et
contrôler de manière sélective, sur la base de l'identification du dispositif informatique (100), un accès à au moins une ressource disponible par l'intermédiaire de la station d'accueil (110) par le dispositif informatique (100),
**caractérisé par le fait que** la station d'accueil (110) détermine s'il faut ou non autoriser le dispositif informatique (100) à se connecter en communication à la station d'accueil (110) sur la base de l'identification du dispositif informatique (100), et
l'identification de manière sans fil comprenant utiliser un lecteur d'identification par radiofréquence RFID de la station d'accueil et alimenter de manière inductive une étiquette RFID (101) du dispositif informatique (100) pour identifier le dispositif informatique (100).

6. Procédé selon la revendication 5, comprenant en outre déterminer un niveau d'accès pour le dispositif informatique (100) sur la base de l'identification.

7. Procédé selon la revendication 5, comprenant en outre identifier de manière sans fil la station d'accueil (110) sur le dispositif informatique (100).
